(19) Europäisches Patentamt
European Patent Office
Office européen des brevets

(11) Publication number: **0 222 937**
**A1**

(12) **EUROPEAN PATENT APPLICATION**

(21) Application number: 85307692.5

(51) Int. Cl.⁴: **C02F 3/28**

(22) Date of filing: 24.10.85

(43) Date of publication of application:
**27.05.87 Bulletin 87/22**

(84) Designated Contracting States:
**BE DE FR GB IT NL**

(71) Applicant: **SYRACUSE UNIVERSITY**

**Syracuse New York 13210(US)**

(72) Inventor: **Friedman, Alexander L.**
**161 Brookside Lane**
**Fayetteville New York 13066(US)**
Inventor: **Podolak, Peter L.**
**2710 Academy Drive**
**Westminster Maryland 21157(US)**

(74) Representative: **Jennings, Guy Kenneth et al**
**GILL JENNINGS & EVERY 53-64 Chancery Lane**
**London WC2A 1HN(GB)**

# (54) Apparatus and method for treatment of waste water.

(57) High strength waste water containing anaerobically digestible nutrients and organic substrates is treated by passing it through a sealed reactor housing (11) partitioned into a number of individual, equal volume compartments (13) by means of partitions (14) extending upwardly from the floor (15) to slightly above the normal water level (16) to leave an uninterrupted headspace (17). A horizontal shaft (20) driven by a motor (21) carries plastic contactor discs (23) which rotate so as to draw biomass sequentially through the waste water and headspace so that nutrients and substrates are removed from the waste water and gases are expelled into the headspace. Influent is supplied via an inlet pipe (25) and a pump (27) driven by a motor (28) and initially passes through a mixing chamber containing an impeller (31) on the shaft (20). A vacuum pump (40) and a vacuum control valve (42) regulate the pressure in the head space (17) and a controller (45) controls both the pump motor (28) and the control valve (42) in response to data provided by a pressure sensor (46) measuring the headspace pressure and a flow sensor (47) so as to maintain the reactor at optimum operating conditions over a wide range of loads.

FIG. 1

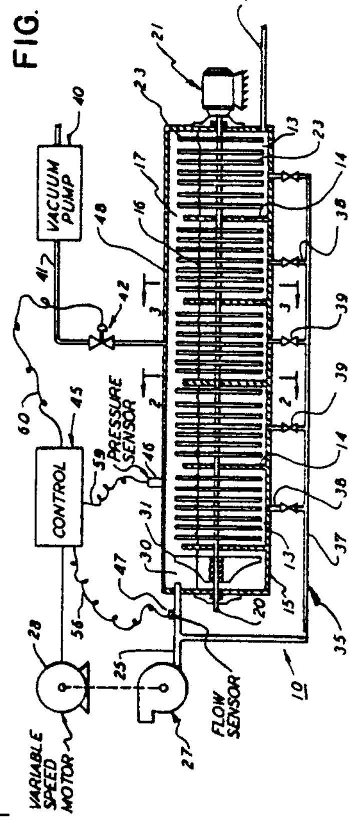


EP 0 222 937 A1

## Apparatus and method for treatment of waste water

This invention relates to an improved waste water treatment system and, in particular, to the control of an anaerobic system for treating high strength waste water.

Many different types of anaerobic systems have been devised for treating waste water containing various bio-degradable substrates and nutrients. All these systems operate under ambient or atmospheric conditions are are for the most part rate limited in terms of the amount of influent that can be efficiently passed through the system. The physical transport of gaseous end products through a bio-film can significantly influence the anaerobic de-composition of organic waste. Anaerobic bio-films are extremely porous materials and the rapid generation of micro-bubbles there-in, usual of carbon dioxide and methane, can black the transport of nutrients and substrate to the organic cell sites. Transport of exoenzymes and other metabolic end products are also constrained by the micro-bubbles. An increase in the concentration of these materials beyond a certain level further results in product inhibition and/or the accumulation of toxic materials at the cell sites.

Molecular hydrogen ($H_2$) is a key intermediate in controlling complex inter-species reactions occurring during the anaerobic degradation of waste in a fluid medium. Molecular hydrogen is released by one group of micro-organisms into solution and used by methanogens to reduce carbon dioxide to methane. By the same token, high partial pressure of $H_2$ in solution causes the conversion of substrate such as ethanol, propionate and bytyrate to methane to produce unfavourable free energy levels. Therefore, when operating under atmospheric conditions, the partial pressure of $H_2$ must be maintained within a very narrow range to efficiently produce methane.

Sulphides are also produced in solution from sulphates and sulphur containing compounds that are also present in the waste water. This, in turn, raises the toxic levels of sulphides in the bio-film to a point where the effectiveness of the anaerobic bacterial system is adversely affected.

As will be explained in greater detail below, many of the critical parameters that adversely affect the complex metabolic inter-actions of various species involved in anaerobic processes can be controlled or reduced by controlling the headspace pressure over the waste water as it is being treated. By operating the system at sub-atmospheric conditions, gas pressures in and about the bio-films can also be relieved by reducing their solubility in the waste water.

It is therefore an object of the present invention to improve anaerobic reactors for treating high strength waste water. Another object is to reduce the gas solubility in an anaerobic reactor to encourage the rapid and efficient removal of inhibiting and toxic gases from the solution to permit continuous operation of a heavily loaded system.

According to the invention, an anaerobic reactor comprises a gas tight reactor housing for containing a quantity of waste water to leave a headspace above the water level, the housing having a shaft rotatably mounted therein, means to turn the shaft at a desired rate, a plurality of spaced-apart contactors affixed to the shaft for supporting a bio-film of anaerobic organisms, the contactors being arranged for partial immersion in the waste water whereby the bio-film is passed in series through the waste water and the headspace, means for passing waste water through the reactor housing, a detector for determining the loading on the reactor, and control means responsive to the detector for regulating the pressure in the headspace to maintain the reactor at an optimum operating level.

For a better understanding of these and other objects of the present invention reference is had to the following detailed description of the invention which is to be read in conjunction with the accompanying drawings, wherein:

Figure 1 is a side elevation in section showing a reactor in accordance with the present invention;

Figure 2 is a section taken along lines 2-2 in Figure 1;

Figure 3 is a section taken along lines 3-3 in Figure 1;

Figure 4 is a graphic representation showing the response of the present reactor in terms of COD (chemical oxygen demand) areal removal at different headspace pressures;

Figure 5 is also a graphic representation showing the slopes of the linear portions of the curves shown in Figure 4; and

Figure 6 is a graphic representation showing maximum COD removal rates as a function of attainable headspace pressure.

Referring initially to Figures 1 to 3, there is shown an anaerobic reactor, generally referenced 10; for treating high strength waste water containing anaerobically digestible nutrients and organic substrates. The reactor system includes a gas-and-liquid-tight housing 11 that is capable of containing a quantity of waste water 12 therein that might include bio-digestible materials such as carbohydrates, fats, proteins, alcohols, acids and the like that are either soluble or insoluble in the waste water and which can exist alone or in combination with other substrates and nutrients. The housing is partitioned into a number of individual compartments or stages 13-13 of equal volume by means of partitions 14-14. However, in some applications it may be desirable to use stages of unequal size.

The partitions 14-14 extend upwardly from the floor 15 of the reactor housing to an elevation that is slightly above the normal level 16 of the waste water maintained therein. This provides for a continuous relatively uninterrupted headspace 17 over the waste water whereby the pressure over each stage remains the same during anaerobic activities. As will be explained in greater detail below, the headspace gas pressure is reduced under controlled conditions to a predetermined sub-atmospheric value during anaerobic treatment of the waste water to increase both the volumetric and areal COD removal rates to provide for more efficient waste water treatment. The term COD as herein used refers to the chemical oxygen demand of the nutrients and substrates and is well known in the art as a measure of the waste water strength in terms of milligrams per litre.

A horizontally disposed shaft 20 is mounted in the housing upon suitable watertight bearings and is operatively coupled to a variable speed drive motor 21. Secured to the shaft at spaced intervals within the housing are a plurality of contactors 23-23. Each contactor is a plastic disc that is affixed to the shaft for rotation therewith. The discs are positioned so that an equal number are contained within each reactor stage with between about fifty to eight percent of the surface of each disc immersed in the waste water. In practice, colonies of anaerobic micro-organisms form a biomass upon the surfaces of each disc which is capable of feeding upon digestible nutrients and substrates found in the waste water. The partially immersed disc draws the biomass sequentially through the waste water and the headspace so that nutrients and substrates are removed from the waste water for a portion of each revolution of the shaft and process gases are readily expelled into the headspace for the remaining portion thereof. This establishes a controlled feeding cycle within the system which overcomes many of the problems associated with systems in which the biomass is completely flooded.

Influent is brought into the reactor housing via an inlet pipe 25 connected to the discharge side of an influent pump 27. The pump is driven by a variable speed motor 28 whereby the rate of entry of influent waste water into the housing can be closely regulated. Initially the influent passes through a mixing chamber 30 that contains an impeller 31 secured to shaft 20 which serves to pre-mix the influent and keeps the waste water contained in the housing agitated. The waste water passes between stages via holes 32-32 (Figure 2) formed in the partitions separating the stages and is finally passed out of the housing via discharge line 33. As can be seen, each treatment stage is segregated by the partitions so that concentration of nutrients and substrates in the waste water is lowered in stages as the waste water moves laterally through the housing. Progressive lowering of the concentration gradient promotes good waste removal while at the same time minimising reactor space.

To extend the operational capacity of the reactor, an auxiliary influent delivery system, generally referenced 35, is furnished which is able to introduce raw influent into one or more selected stages. A bypass line 37 diverts a portion of the influent leaving the influent pump below the housing beneath each of the stages. The line is connected into each stage by a supply line 38 that passes through the floor of the housing and a remotely controlled valve 39. The valves are capable of being selectively adjusted to regulate the amount of raw influent that is introduced into each treatment stage.

A vacuum pump 40 is connected to the headspace of the reactor via line 41 and a vacuum control valve 42 that is operable to regulate headspace pressure within the reactor housing. A controller 45, which can be a suitable micro-processor, is programmed to regulate the activity of both the influent pump motor and the vacuum control valve 42 in response to data provided by a pressure sensor 46 and a flow sensor 47. The pressure sensor is situated in the roof 48 of the reactor housing and is arranged to measure the headspace pressure maintained in the housing. The influent flow sensor is mounted in influent line 25 and is arranged to measure the rate of flow of the entering waste water. The speed of the influent pump and the pressure in the housing are adjusted by the controller to maintain the reactor at optimum operating conditions over a wide range of loading conditions.

The invention will now be described in greater detail with reference to an example wherein a reactor of the type described was constructed having an internal volume of 6.5 litres. The reactor was approximately 60 cms long and was divided into four stages of equal volume using fixed partitions each of which contained eight 1.88 cm holes to allow solids, gases and liquids to pass between stages. Each stage contained ten 12.70 cm diameter contactor discs 0.318 cm thick spaced at 1.27 cm intervals. The discs furnished a nominal surface area for biomass attachment of about 1.14 $m^2$ and the shaft was turned at 17 rpm.

The reactor was operated with approximately seventy to eighty percent of the disc area submerged in waste water. Headspace pressure was monitored by a pressure gauge and waste water flow through the ractor was regulated by controlling the speed of the pump. The reactor, during operation, was kept at a temperature of between 32° and 38°C. Off-gases were vented through the vacuum pump and measured using a water displacement technique. The substrate used for a carbon source was sucrose while sodium bicarbonate and inorganic nutrients were added to the influent to provide an influent of known constant strength.

The reactor was operated under different mass loading conditions and pressure combinations and the results are tabulated below:

| | EXPERIMENTAL CONDITIONS | Gas Phase Absolute Pressure (Atmospheres) 1.0 | 0.80 | 0.54 |
|---|---|---|---|---|
| [3000 mg/l.] | Mass COD Applied (gm/day) | 48.63 | 47.04 | 48.65 |
| | Observed VSS Growth Yield | 0.165 | 0.212 | 0.329 |
| | Surface Area Used ($m^2$) | 0.855 | 0.855 | 0.855 |
| | Methane Yield (liters/g COD Removed) | 0.287 | 0.224 | 0.213 |
| | Areal Removal Rate (Kg COD/$m^2$-day) | 0.04965 | 0.05208 | 0.05253 |
| | Volumetric Removal Rate (Kg COD/$m^3$-day) | 6.324 | 6.634 | 6.691 |
| | Percent Removal | 87.3 | 94.7 | 92.9 |
| [5000 mg/l.] | Mass COD Applied (gm/day) | 70.00 | 89.24 | 92.50 |
| | Observed VSS Growth Yield | 0.159 | 0.253 | 0.200 |
| | Surface Area Used ($m^2$) | 1.140 | 0.855 | 0.855 |
| | Methane Yield (liters/g COD Removed) | 0.364 | 0.347 | 0.203 |
| | Areal Removal Rate (Kg COD/$m^2$-day) | 0.05226 | 0.08650 | 0.09156 |
| | Volumetric Removal Rate (Kg COD/$m^3$-day) | 6.657 | 11.018 | 11.662 |
| | Percent Removal | 85.1 | 82.9 | 84.6 |
| [8000 mg/l] | Mass COD Applied (gm/day) | 173.9 | 173.7 | 173.6 |
| | Observed VSS Growth Yield | 0.227 | 0.289 | 0.309 |
| | Surface Area Used ($m^2$) | 0.855 | 0.855 | 0.855 |
| | Methane Yield (liters/g COD Removed) | 0.238 | 0.262 | 0.367 |
| | Areal Removal Rate (Kg COD/$m^2$-day) | 0.1038 | 0.1074 | 0.1137 |
| | Volumetric Removal Rate (Kg COD/$m^3$-day) | 13.217 | 13.676 | 17.028 |
| | Percent Removal | 51.0 | 52.8 | 65.6 |

NOTE: Areas and volumes are based on actual reactor capacity used to achieve removal values shown.

As can be seen, higher yields were observed for all reduced headspace gas pressures which is desirable at system start-up and during recovery from extended toxic shocks. Not only was improved COD removal under vacuum operation observed, but also an increase in COD utilisation in each of the stages, particularly the first two stages, where the bulk of COD removal takes place. A linear relationship between headspace pressure and mass COD removal was observed. Under a reduced pressure of 0.54 atmospheres the first stage removal rate was about doubled for the loading at 3000 and 5000 mg of COD per litre of influent. For 8000 mg COD/litre influent, the removal rate increased by seventy seven percent. Typically about sixty two percent of the total COD removal took place in the first two stages and linear relationship between pressure and removal rate indicates that both the mass and areal removal rates are significantly increased as a function of both increased loading and reduced headspace pressure.

Under atmospheric conditions, higher concentrations of propionic and butyric acids were observed in each stage of the reactor than observed at lower pressures. High concentrations of these acids reflect baterial attempts to regulate redox potential, reduce acid equivalents and remove toxic accumulations of molecular hydrogen under stressed conditions. Vacuum operations helped to alleviate metabolic inefficiencies indicated by the presence of the propionic and butyric acids. As a result, greater COD removal and minimisation of pH problems associated with start-up and shock organic loads on anaerobic systems can be obtained at reduced operating pressures. Furthermore, higher pH values at reduced pressures indicate that organic loadings of the anaerobic system can be increased under vacuum operation without the toxic effects related to low pH values.

The observed yield for the noted reactor ranges from 0.16 for atmospheric conditions to 0.33 to 0.54 atmospheres as illustrated in the previous table. Observed yield, as herein used, is defined as the mass of effluent volatile suspended solids generated per mass of COD removed across the reactor during steady state measurement periods. In each case, the observed yield measured under reduced headspace pressure was greater than that for atmospheric conditions. For high loading conditions with influent COD concentrations of about 8000 mg/litres methane yields increased substantially at 0.54 atmosphere.

The COD removal was observed to be largely completed in the first three stages of the reactor. The removal through the first three stages was analysed in terms of areal removal rates in both a linear loading range and a non-linear loading range.

Referring now to Figure 4, the COD removal in terms of grams per square meter of contactor surface per day ($g/m^2/dy$) is plotted against the COD applied to the reactor. The curves show that the areal removal rates change linearly over the 50-125 $g/m^2/dy$ COD range for varying headspace pressures with the lines becoming asymptotic to a limiting COD removal rate for each observed pressure.

The slopes (COD removed/COD applied) of the linear portions of the curves shown in Figure 4 are plotted as a function of headspace pressure in Figure 5. The data clearly shows that areal removal rates increase substantially as headspace pressure is reduced. The linear portion of the curves can be described by the relationship:

$M_R = M_A\ C(1.06-0.497P)-k(20.59P-2.63)$ (1)

where:

$M_R$ is the mass COD removed in $g/m^2/dy$,

$M_A$ is the mass COD applied to the reactor in $g/m^2/dy$,

C and k are constants relating to the source characteristics of the influent, and P is the headspace absolute pressure in atmosphere.

The constants C and k are determined experimentally from empirical data for each classification of waste water where the value of the constant is about 1.0 for easily degradable waste water such as sugar and less than 1.0 for more complex waste waters.

When the limiting COD areal removal rates indicated in Figure 4 are plotted against headspace pressure as shown in Figure 6, a linear relationship is evident. Here again the data clearly shows the limiting COD removal rate also varies linearly with pressure over a wide loading range. The maximum or limiting COD removal rate over this range is described by the relationship:

$M_R = C(155.8-51.6P)$ (2)

where the terms are again as described above.

From the observed data it is evident that subatmospheric headspace operation of the reactor improved both areal and volumetric COD mass removal rates. These improvements are found to be related linearly to the applied vacuum and thus easily adaptable for use in a computerised control system of the type herein described. As can be seen, the controller can be programmed to regulate both the loading on the reactor and the vacuum maintained in the reactor housing to continually hold the system at optimum operating conditions. In this particular application is is assumed that the make-up of the waste water influent is relatively constant and known. The rate of flow of the influent is thus a clear indication of the loading placed on the system.

The flow sensor 47 is adapted to send flow data to the controller 45 by data line 56. Similarly, the pressure within the housing is also monitored by vacuum sensor 46 and this data is also provided to the controller via data line 59. As can be seen, by knowing the mass rate of flow being delivered to the system, the pressure within the housing can be set using vacuum control valve 42 to maintain the system at a desired operating point for optimum efficiency. Control signals are sent from the controller to the valve by means of control line 60.

As can be seen, reduced pressure operation of the anaerobic reactor results in a substantial improvement in COD removal for high loading conditions. Furthermore, both the linear and limiting COD removal rates vary linearly over a relatively wide operating range so that optimum operating conditions can be accurately predicted and the reactor easily controlled for maximum efficiency as herein described. For operational systems that are presently overloaded because of shock loading, pH, $H_2$, $H_2S$ and end product toxicity, an existing reactor can also be easily retrofitted for sub-atmospheric operation to thus alleviate the problems. In addition, vacuum operation will result in rapid biomass growth during start-up and accelerated recovery from extended toxic conditions.

## Claims

1. Apparatus for treating waste water containing anaerobically digestible nutrients and organic substrates, the apparatus comprising a gas tight reactor housing for containing a quantity of waste water to leave a headspace above the water level, the housing having a shaft rotatably mounted therein, means to turn the shaft at a desired rate, a plurality of spaced-apart contactors affixed to the shaft for supporting a bio-film of anaerobic organisms, the contactors being arranged for partial immersion in the waste water whereby the bio-film is passed in series through the waste water and the headspace, means for passing waste water through the reactor housing, a detector for determining the loading on the reactor, and control means responsive to the detector for regulating the pressure in the headspace to maintain the reactor at an optimum operating level.

2. Apparatus according to claim 1, wherein the operating level of the reactor is regulated for fractional COD removal rates according to the relationship:

$M_R = M_A\ C(1.084-0.48P) + k(16.24P-6.44)$

where:

$M_R$ is the mass COD removed in g/m²/dy,

$M_A$ is the mass COD applied in g/m²/dy,

C and k are both constants relating to the source characteristics of the influent, and

P is the headspace absolute pressure in atmospheres.

3. Apparatus according to claim 1 wherein the operating level of the reactor is regulated for maximum COD removal according to the relationship:

$M_R = M_A C(155.8-51.6P)$

where:

$M_R$ is the mass COD removed in g/m²/dy,

$M_A$ is the mass COD applied in g/m²/dy,

C is a constant relating to the source characteristic of the influent, and P is the headspace absolute pressure in atmospheres.

4. Apparatus according to any one of the preceding claims, wherein the means for passing waste water through the housing includes a variable speed influent pump for regulating the rate of influent entering the reactor housing.

5. Apparatus according to any one of the preceding claims that further includes a mixing means for agitating the waste water contained in the reactor.

6. Apparatus according to any one of the preceding claims wherein the reactor housing contains a series of partitions for dividing the housing into a series of treatment stages.

7. Apparatus according to claim 6 wherein each partition extends upwardly from the floor of the reactor housing to an elevation between the level of the waste water and the ceiling of the reactor housing whereby each stage is subjected to the same headspace pressure.

8. A method of treating waste water containing anaerobically digestible nutrients and substrates, the method including the steps of passing the waste water through a gas tight reactor, passing a series of contactors each supporting a bio-film thereon sequentially through the waste water and a headspace thereover, establishing a sub-atmospheric pressure in the headspace, sensing the influent loading on the reactor, and controlling the pressure in the headspace in response to the loading to maintain the system at a desired operating level.

9. A method according to claim 8 wherein operation of the reactor is controlled for fractional COD removal rates according to the relationship:

$M_R = M_A\ C(1.084-0.48P) + k(16.24P-6.44)$

where:

$M_R$ is the mass of COD removed in g/m²/dy,

$M_A$ is the mass of COD applied in g/m²/dy,

C and k are both constants relating to the source characteristic of the influent, and P is the headspace absolute pressure in atmospheres.

10. A method according to claim 8 wherein operation of the reactor is controlled for maximum COD removal according to the relationship:

$M_R = M_A C(155.8-51.6P)$
where:
$M_R$ is the mass of COD removed in g/m²/dy,
$M_A$ is the mass of COD applied in g/m²/dy,
C is a constant relating to the source characteristic of the waste water,
P is the headspace absolute pressure in atmospheres.

11. A method according to any one of claims 8 to 10 that includes the further step of partitioning the reactor into a plurality of sequential stages.

12. A method according to claim 11 that includes the further step of mixing the influent before it passes into the first stage.

13. A method according to claim 11 that includes the further step of adding additional influent to one or more selected stages.

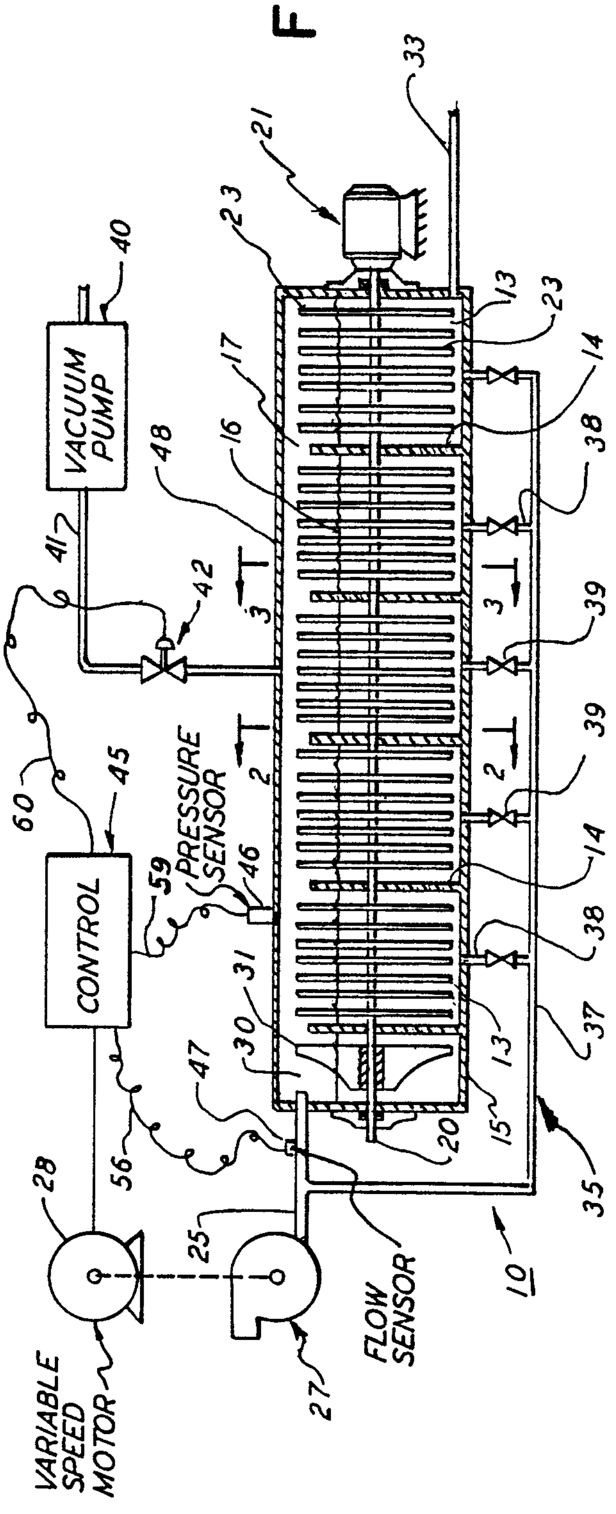


FIG. 1

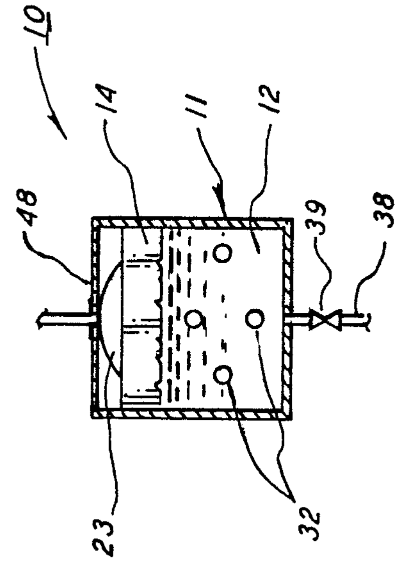


FIG. 2

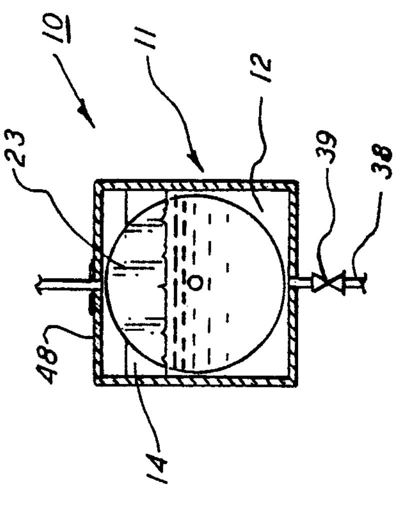


FIG. 3

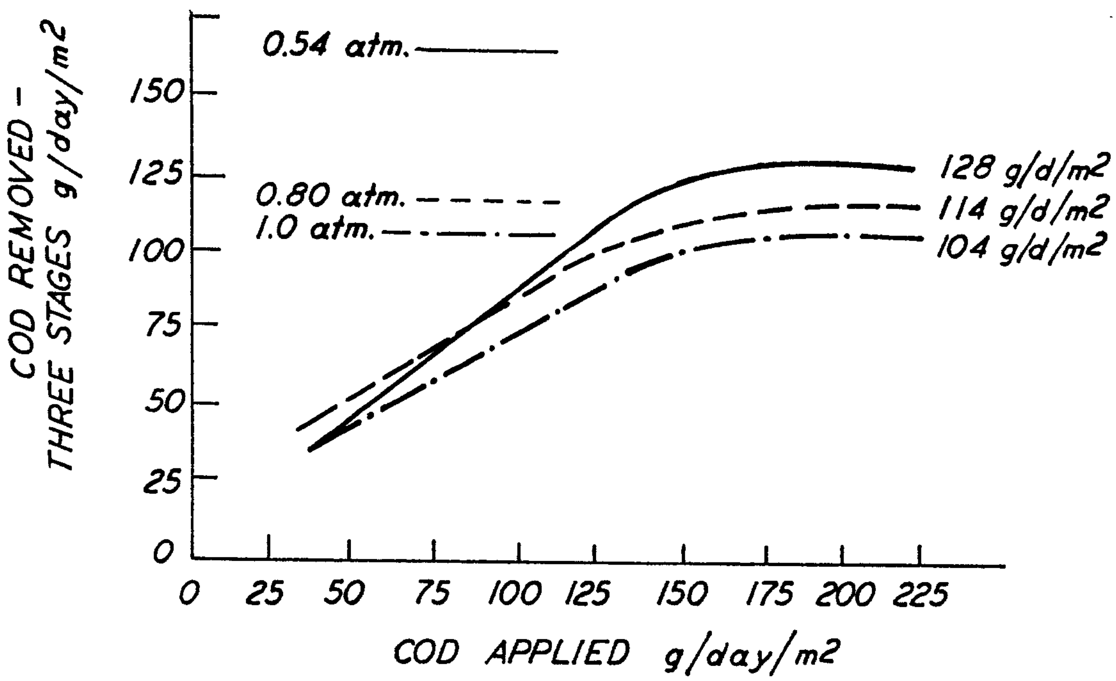
0.54 atm.
0.80 atm.
1.0 atm.
128 g/d/m2
114 g/d/m2
104 g/d/m2
COD REMOVED - THREE STAGES g/day/m2
0
25
50
75
100
125
150
175
200
225
COD APPLIED g/day/m2

FIG. 4

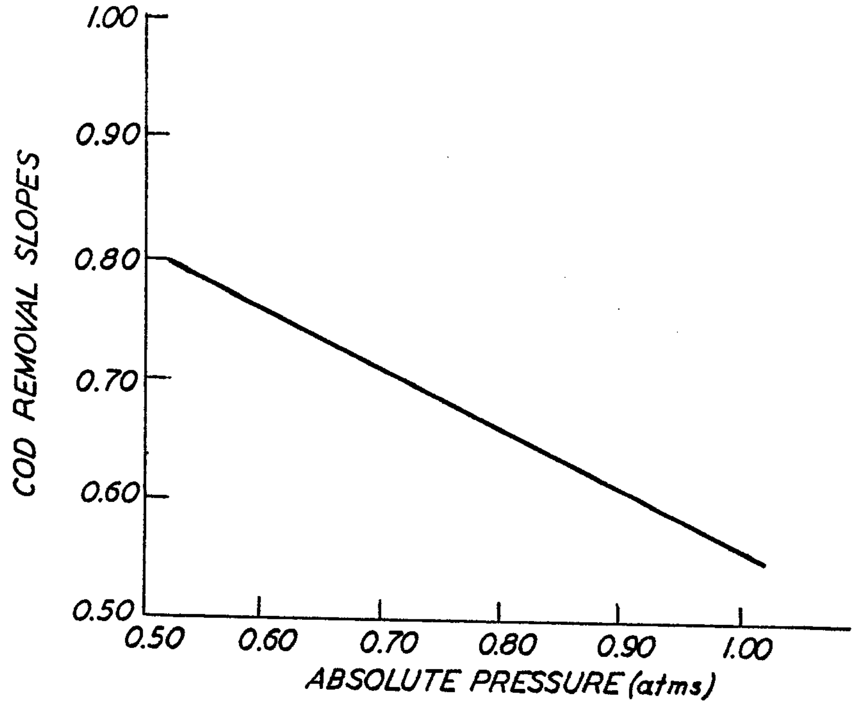


FRACTIONAL COD REMOVAL AS A FUNCTION OF HEADSPACE PRESSURE - LINEAR LOADING RANGE

FIG. 5

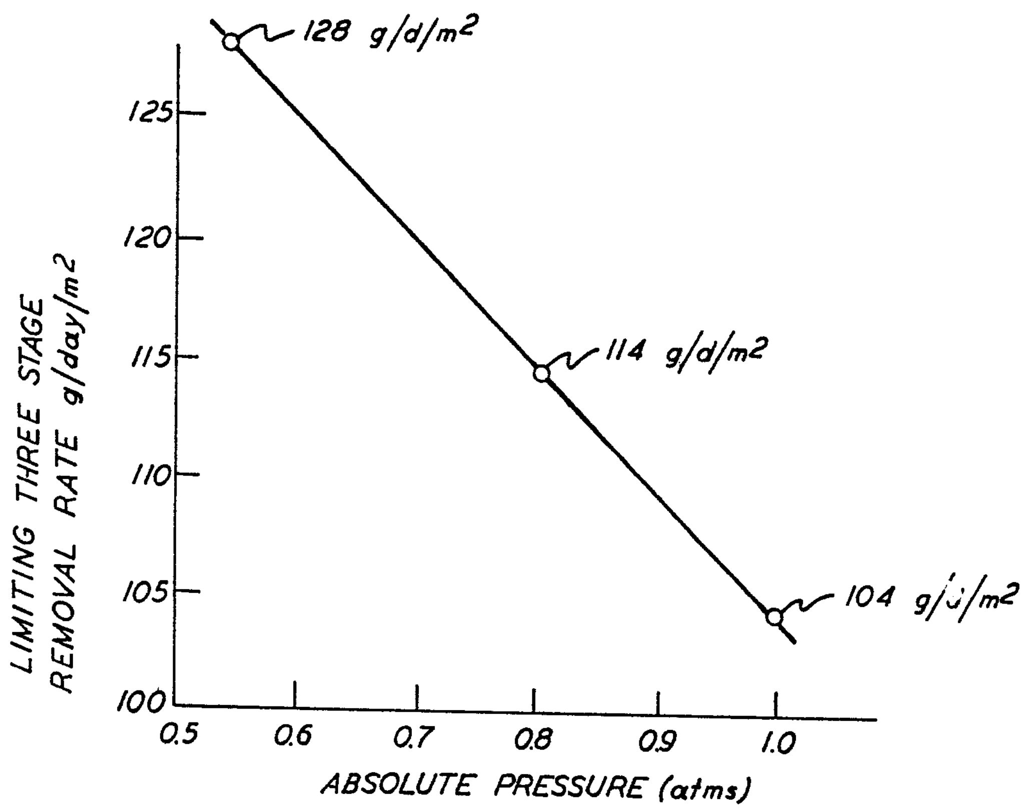


MAXIMUM COD REMOVAl - NON LINEAR

FIG. 6

European Patent Office

# EUROPEAN SEARCH REPORT

Application number

EP 85 30 7692

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-4 211 647 (A. FRIEDMAN et al.)<br>* Column 2, line 48 - column 3, line 34; column 4, lines 12-48 *<br>--- | 1,5-7, 11-13 | C 02 F 3/28 |
| A | GB-A-2 063 239 (CELANESE CORP.)<br>* Page 3, line 42 - page 4, line 40; figure 1 *<br>--- | 1-4,8-10 | |
| A | DD-A- 226 553 (VEB KOMPLETTE CHEMIEANLAGEN)<br>* Front page: abstract *<br>----- | | |
| | | | TECHNICAL FIELDS SEARCHED (Int. Cl.4) |
| | | | C 02 F |

The present search report has been drawn up for all claims

| Place of search | Date of completion of the search | Examiner |
|---|---|---|
| THE HAGUE | 24-06-1986 | TEPLY J. |

CATEGORY OF CITED DOCUMENTS

- X : particularly relevant if taken alone
- Y : particularly relevant if combined with another document of the same category
- A : technological background
- O : non-written disclosure
- P : intermediate document
- T : theory or principle underlying the invention
- E : earlier patent document, but published on, or after the filing date
- D : document cited in the application
- L : document cited for other reasons
- & : member of the same patent family, corresponding document

EPO Form 1503 03 82